# EUROPEAN PATENT SPECIFICATION

(11) **EP 2 228 210 B1**
(45) Date of publication and mention of the grant of the patent: **20.08.2014**
(21) Application number: 08870298.0
(22) Date of filing: 26.12.2008
(51) Int. Cl.: B32B 5/24, A63H 33/00, A63H 33/22, B41M 1/12, B41M 3/00, C09D 11/16

(54) **FABRIC SHEET CHANGING IN COLOR WITH WATER**
STOFFBAHN MIT FARBVERÄNDERUNG BEI KONTAKT MIT WASSER
FEUILLE DE TISSU CHANGEANT DE COULEUR DANS L'EAU

(30) Priority: 04.01.2008 JP 2008000194
(43) Date of publication of application: 15.09.2010
(73) Proprietor: Sakura Color Products Corporation, Osaka-shi, Osaka 537-0025 (JP)
(72) Inventor: OKUDA, Norimasa, Osaka-shi Osaka 530-0041 (JP); SAWA, Tomohiro, Ikoma-shi Nara 630-0137 (JP)
(74) Representative: Treeby, Philip David William
(86) International application number: PCT/JP2008/073718
(87) International publication number: WO 2009/087925

(56) References cited:
- WO-A1-2009/000849
- WO-A1-2009/027172
- WO-A2-2005/046620
- DE-A1- 10 224 984
- JP-A- 2005 125 123
- JP-A- 2006 043 971
- JP-A- 2007 050 694

## Description

### TECHNICAL FIELD

The present invention relates to a water-metachromatic fabric sheet.

### BACKGROUND ART

Conventionally, a toy set that changes in color with water, including a water-metachromatic fabric sheet and water applying means in the form of a writing instrument consisting of a pen tip member formed of a plastic porous body or a fabric processed body and a water container, or in the form of an applicator formed of a plastic porous body or a fabric processed body, has been known (Patent Document 1).

Specifically, according to Patent Document 1, a toy set is provided, which includes: a water-metachromatic fabric sheet large enough to let a toddler sit and play thereon, having, on a surface of the fabric of 30g/m² to 1000g/m² in weight, a porous layer of which transparency changes in a liquid-absorbed state and a liquid-non-absorbed state, with particulate silicic acid dispersed and fixed in a binder resin, and a color layer selected from characters, signs and patterns, provided below said porous layer; and water applying means in the form of a writing instrument consisting of a pen tip member formed of a plastic porous body or a fabric processed body and a water container, or in the form of an applicator formed of a plastic porous body or a fabric processed body.

Patent Document 1: Japanese Patent No. 3801819

According to Patent Document 1, the color layer selected from characters, signs and patterns is provided below the porous layer and, therefore, the color changes from all white (dried state) to all blue (water-containing state) from the dried state to the state containing water with water applied by the water applying means, and the range of color change does not include any intermediate color shading of, for example, light blue (dried state) to dark blue (water-containing state).

JP2006043971 discloses a discolorable laminate which perpetually indicates a function to discolor from colored opaqueness to colored transparency in the repeated use by a medium such as water, is scarcely contaminated, and satisfies practicality and safety. In the discolorable laminate, a porous layer in which a porous white pigment with a low index of refraction and a colored pigment different from the white pigment in color tone are dispersed and fixed in a binder resin, the average pore diameter A (µm) of the white pigment and the average particle size B (µm) of the colored pigment meet formula: 0.02 µm≤2A<B≤10 µm, and transparency is different between a liquid absorption state and a non-liquid absorption state, is formed on a support.

JP2007050694 discloses a reversible color change body which enables a user to form an image on a lower layer using a sun light or ultraviolet ray lump by making the lower layer invisible or visible using a light-shielding/light-transmitting layer which is different in translucency depending on whether it keeps a liquid absorbed or liquid non-absorbed, and a reversible color change body set using the same. The reversible color change body comprises a support medium having photachromic property imparted by a photochromic compound, and the light-shieldingllight-transmitting layer, which is different in translucency depending on whether it keeps a liquid absorbed or liquid non-absorbed, on the support medium.

JP2005125123 discloses a water-discoloring fabric web sheet, capable of forming a sharp fluoroscopic image, and preventing supersaturate water from oozing out of a sheet back part by satisfying water resistance and folding-up resistant strength. The water-discoloring fabric web sheet is constituted by forming a porous layer of fixing a particulate-like silicic acid and the other low refractive index pigment to a binder resin in a dispersion state, on a support composed of a fabric web falling within a range of basis weight of 30 to 1.000 g/m.

According to Patent Document 1, the color layer selected from characters, signs and patterns is provided below the porous layer and, therefore, the color changes from all white (dried state) to all blue (water-containing state) from the dried state to the state containing water with water applied by the water applying means, and the range of color change does not include any intermediate color shading of, for example, light blue (dried state) to dark blue (water-containing state).

JP2006043971 discloses a discolorable laminate which perpetually indicates a function to discolor from colored opaqueness to colored transparency in the repeated use by a medium such as water. In the discolorable laminate, a porous layer in which a porous white pigment with a low index of refraction and a colored pigment different from the white pigment in color tone are dispersed and fixed in a binder resin, the average pore diameter A (µm) of the white pigment and the average particle size B (µm) of the colored pigment meet formula: 0.02 µm≤2A<B≤10 µm, and transparency is different between a liquid absorption state and a non-liquid absorption state, is formed on a support.

JP2007050694 discloses a reversible color change body which enables a user to form an image on a lower layer using a sun light or ultraviolet ray lamp by making the lower layer invisible or visible using a light-shielding/light-transmitting layer which is different in translucency depending on whether it keeps a liquid absorbed or liquid non-absorbed, and a reversible color change body set using the same. The reversible color change body comprises a support medium having photochromic property imparted by a photochromic compound, and the light-shielding/light-transmitting layer, which is different in translucency depending on whether it keeps a liquid absorbed or liquid non-absorbed, on the support medium.

JP2005125123 discloses a water-discoloring fabric web sheet, capable of forming a sharp fluoroscopic image, and preventing supersaturate water from oozing out of a sheet back part by satisfying water resistance and folding-up resistant strength. The water-discoloring fabric web sheet is constituted by forming a porous layer of fixing a particulate-like silicic acid and the other low refractive index pigment to a binder resin in a dispersion state, on a support composed of a fabric web falling within a range of basis weight of 30 to 1,000 g/m.

### DISCLOSURE OF THE INVENTION

### PROBLEMS TO BE SOLVED BY THE INVENTION

An object of the present invention is to provide a water-metachromatic fabric sheet of which color changes with water, having a color range of gradation in similar colors, for example, from a light blue region in the dried state to a dark blue region in the water-containing state.

### MEANS FOR SOLVING THE PROBLEMS

Through intensive study, in order to attain the above-described object, the inventors have reached a water-metachromatic fabric sheet as described in claim 1.

Preferably, the mixture layer is prepared by dispersing and fixing porous particulate aluminum silicate and a colorant in a binder resin.

Further, it is preferable that a sheet member impervious to water is laminated on a back surface of the fabric, as it increases flexibility, provides wrinkle-resistance, attains sufficient smoothness and facilitates folding.

The present invention provides, as a preferable method, a method of manufacturing a water-metachromatic fabric sheet as described in claim 5.

More preferable is a method of manufacturing a water-metachromatic fabric sheet, including the steps of: on a surface of a fabric, printing, by serigraph, a second mixture layer containing 0.01 to 20 wt% of porous particulate aluminum silicate and 80 to 99.99 wt% of colorant dispersed and fixed in a binder resin; and immediately thereafter printing, by serigraph, a first mixture layer containing 80 to 99.99 wt% of porous particulate aluminum silicate and 0.01 to 20 wt% of colorant dispersed and fixed in a binder resin.

### EFFECTS OF THE INVENTION

As can be seen from the foregoing, in the present invention, a mixture layer containing porous particulate aluminum silicate and colorant is printed on the surface of a fabric. Therefore, a water-metachromatic fabric sheet having a color range of so-called gradation in similar colors can be provided, of which color changes from light blue region in the dried state to a dark blue region in the water-containing state. Naturally, when dried from the water-containing state (dark blue region), the color changes, for example, to a light blue region.

As described above, the present invention provides a water-metachromatic fabric sheet, having the color change range of gradation in similar colors that has not been attained conventionally. As a result, different from the conventional art in which the background was all white only, various background colors may be realized, realizing fancy and interest not known to date.

### BEST MODES FOR CARRYING OUT THE INVENTION

### <Particulate Aluminum Silicate>

In the present invention, as a component for attaining transparency in the liquid-absorbed state of the mixture layer, particulate aluminum silicate is specifically used. Generally, as the component for attaining transparency in the liquid-absorbed state, particulate silicic acid described in Patent Document 1, particularly, particulate silicic acid manufactured by a wet process, having high hiding power, is often used. As compared with particulate aluminum silicate used in the present invention, however, the wet particulate silicic acid has large specific surface area for its average grain diameter. Specifically, the BET value of particulate aluminum silicate having the average grain diameter of 5 to 8 µm is generally about 35 to about 110 m²/g, while the BET value of particulate silicic acid manufactured by a wet process, having the average grain diameter of 4.5 to 100 µm is generally about 190 to about 700 m²/g. This means that the pores forming the porous structure of particulate silicic acid manufactured by a wet process, has relatively large volume (mesopores). Therefore, when the particulate silicic acid manufactured by a wet process, is used as a component for the mixture layer, colorant component existing in its vicinity is taken into the pores. As a result, the degree of color change in gradation between the dried state and the water-containing state is not very distinguishable and, therefore, its use is not preferable.

The porous particulate aluminum silicate used in the present invention is not specifically limited and any may be suitably used provided that it is particulate and has a porous structure inherent to aluminum silicate. By way of example, one known by the trade name "Sipernat 820" C, I, No. 77004 (manufactured by Degussa), may be used.

The "particle" of particulate aluminum silicate as used in the present specification refers to particles having the diameter of about 0.2 to 60 µm and preferably 1 to 30 µm as represented by d50 value measured by laser scattering method in compliance with ISO 13320-1. For instance, "Sipernat 820" mentioned above has the d50 value of about 7.5 µm.

### <Colorant>

Various types of dye, pigment and the like may be used as the colorant in the present invention. Possible examples include trade name "POLYMO NAVY BLUE NT231-ECO" (manufactured by Kiwa Chemical Industry Co., Ltd.) for blue, trade name "Ryudye-w Green F2G" (manufactured by Dainippon Ink & Chemicals Incorporated) for green and trade name "Lumikol" series (manufactured by Nihon Keiko Kagaku) for fluorescent colors.

### <Mixture layer>

The mixture layer is prepared by dispersing and fixing the porous particulate aluminum silicate and the colorant in a binder resin.

The mixture layer may be provided as a first mixture layer in which the porous particulate aluminum silicate and the colorant are dispersed and fixed in the binder resin. Alternatively, the water-metachromatic fabric may have a first mixture layer in which the porous particulate aluminum silicate and the colorant are dispersed and fixed in the binder resin and a second mixture layer in which the porous particulate aluminum silicate and the colorant are dispersed and fixed in the binder resin. Alternatively, on said first mixture layer, a layer of porous particulate aluminum silicate may be laminated. Here, in order to enlarge the difference in color tone between the dried state and the water-containing state, it is preferred to make larger the mixture ratio of particulate aluminum silicate in the first mixture layer than the mixture ratio of particulate aluminum silicate in the second mixture layer.

The mixture layer may appropriately be formed by conventionally known methods, using printing means represented by screen printing such as serigraph, offset printing, gravure printing, coater, tampo print and transfer printing, or application means such as brush painting, spray coating, electrostatic coating, electrodeposition coating, flow coating, roller coating and dip painting.

By way of example, on a fabric surface, a second mixture layer having 0.01 to 20 wt% of porous particulate aluminum silicate and 80 to 99.99 wt% of colorant dispersed and fixed in a binder resin is printed by serigraph and, thereafter, a first mixture layer having 80 to 99.99 wt% of porous particulate aluminum silicate and 0.01 to 20 wt% of colorant dispersed and fixed in a binder resin is printed by serigraph, whereby a second mixture layer of dark color and a first layer of light color are formed on the fabric surface. By the provision of this light-color mixture layer, it becomes possible to provide the water-metachromatic fabric sheet having color change range of gradation of similar colors, of which color changes, for example, from light blue region in the dried state to the dark blue region in the water-containing state. When it is dried from the water-containing state (dark blue region), the color changes to the light blue region.

By a method of manufacturing a water-metachromatic fabric sheet including the steps of printing, on a fabric surface, a second mixture layer having 0.01 to 20 wt% of porous particulate aluminum silicate and 80 to 99.99 wt% of colorant dispersed and fixed in a binder resin by serigraph, and immediately thereafter printing a first mixture layer having 80 to 99.99 wt% of porous particulate aluminum silicate and 0.01 to 20 wt% of colorant dispersed and fixed in a binder resin by serigraph, a mixture layer is formed, in which the first and second mixture layers exist in a mixed state not forming clearly distinguishable layers. By the provision of this light-color mixture layer, it becomes possible to provide the water-metachromatic fabric sheet having color change range of gradation of similar colors, of which color changes, for example, from light blue region in the dried state to the dark blue region in the water-containing state. When it is dried from the water-containing state (dark blue region), the color changes to the light blue region.

When the mixture layer is made thicker, the difference in color gradation when the water is absorbed becomes larger. Though the amount of application (when the first and second mixture layers are provided, the total amount of application) is not specifically limited, at least 5g/m² is preferred and at least 20g/m² is more preferred, in order to clarify the difference in gradation. If the amount is smaller than 5g/m², the color gradation difference becomes small and, in addition, the underlying fabric may possibly be seen thorough the surface. If the amount of application is too much, it becomes difficult to form the mixture layer through a simple method such as serigraph and, therefore, the preferable amount of application is at most 200g/m² and more preferable amount is at most 100g/m². The most preferable amount of application is 30 to 50g/m².

### <Binder>

Any binder resin may be used in the present invention provided that porous particulate aluminum silicate and colorant can be fixed in a dispersed state in the binder resin.

Examples include acrylic acid ester resin, acrylic acid ester copolymer resin, nylon resin, vinyl acetate resin and urethane based resin.

Both water-based and oil-based acrylic acid ester resin may be used and aqueous binder is preferred. A hardening agent may be added.

### <Fabric>

As the fabric, woven cloth of polyester or the like, knitted fabric, unwoven fabric, silk cloth and the like may suitably be used.

### <Sheet Member Impervious to Water>

A sheet of ethylene vinyl acetate, for example, may be used. Examples

Examples were prepared by a known method, with the raw materials of following compositions.

### [Example 1]

In Example 1, on a white fabric cloth, printing is done with a mixed ink of the following mixture ratio.

As the first mixed ink, a liquid was prepared in which a surfactant, moisturizer and the like were dissolved or dispersed, to which acryl emulsion (or aciyl/vinyl acetate copolymer emulsion as needed) and a plasticizer were added and stirred. Thereafter, particulate aluminum silicate was added and stirred by a dissolver, and then blue colorant was mixed and stirred. Then, the resulting liquid was dispersed using a roll mill or the like, and thus the mixed ink having the following mixture ratio was prepared. Subsequently, the ink was applied by serigraph, to form a coating film (mixture layer).

By the thus formed mixture layer, it becomes possible to provide the water-metachromatic fabric sheet having color change range of gradation of similar colors, of which color changes, for example, from light blue region in the dried state to the dark blue region in the water-containing state. When it is dried from the water-containing state (dark blue region), the color changes to the light blue region.

| | |
|---|---|
| Particulate aluminum silicate | 16 parts |
| Blue colorant | 4 parts |
| Nonion ST-221 | 3 parts |
| SANMORIN OT-70 | 3 parts |
| Moisturizer | 9 parts |
| Propylene glycol | 6 parts |
| Mowinyl DM 772 | 29 parts |
| Movinyl DM 5 | 9 parts |
| Rikemal PL-012 | 0.3 parts |
| Antiseptic agent | 5.7 parts |
| Water | Remaining parts |

Specifically, the components above are as follows:
Particulate aluminum silicate: trade name "Sipernat 820" C, I, No. 77004 (manufactured by Degussa)
Blue colorant: trade name "POLYMO NAVY BLUE NT-231 ECO" (manufactured by Kiwa Chemical Industry Co., Ltd)
Nonion ST-221: surfactant, polyoxyethylene sorbitan monostearate (HLB=14.9) (manufactured by Nippon Oil and Fats Company Ltd.)
SANMORIN OT-70: surfactant, dioctyl sodium sulfosuccinate (manufactured by Sanyo Chemical Industries, Ltd.)
Moisturizer: urea
Mowinyl DM 772 (binder resin): acryl emulsion, resin part 46% (manufactured by Clariant Polymer)
Mowinyl DM 5: acryl/vinylacetate copolymer emulsion, resin part 53 wt% (manufactured by Clariant Polymer)
Rikemal PL-012: plasticizer, glycerin diacetomonolaurate (manufactured by Riken Vitamin)
Antiseptic agent: trade name "Proxel XL-2", 2-benzoisothia-zolin-3-one (manufactured by Hoechst Gosei Co., Ltd.).

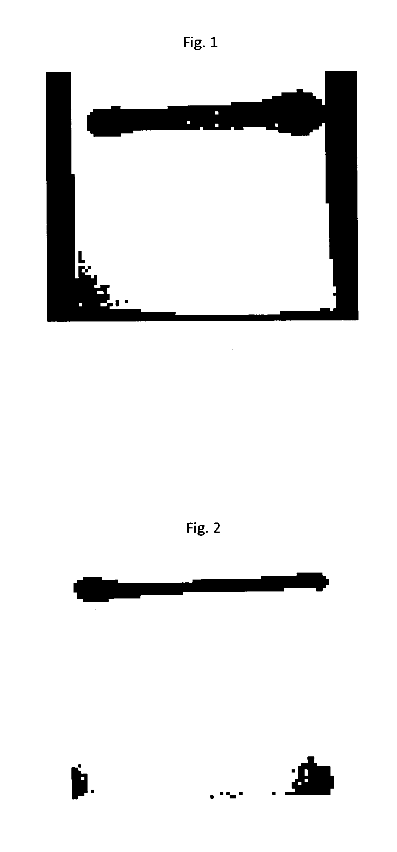

Fig. 1 is a photograph of water-metachromatic fabric sheet obtained as Example 1 when a lateral line is drawn on its dry surface, using a wet calligraphy brush. It can be seen that the portion that absorbed water has its color changed from light blue region to dark blue region.

### [Example 2]

In Example 2, on a white fabric cloth, printing is done with two different types of mixed ink, that is, second mixed ink and first mixed ink, of the following mixture ratios.

As the second mixed ink, a liquid was prepared in which a surfactant, moisturizer and the like were dissolved or dispersed, to which acryl emulsion (or acryl/vinyl acetate copolymer emulsion as needed) and a plasticizer were added and stirred. Thereafter, particulate aluminum silicate was added and stirred by a dissolver, and then blue colorant was mixed and stirred. Then, the resulting liquid was dispersed using a roll mill or the like, and thus the mixed ink having the following mixture ratio was prepared. Subsequently, the ink was applied by serigraph, to form a coating film (second mixture layer).

| | |
|---|---|
| Particulate aluminum silicate | 4 parts |
| Blue colorant | 16 parts |
| Nonion ST-221 | 3 parts |
| SANMORIN OT-70 | 3 parts |
| Particulate aluminum silicate | 16 parts |
| Blue colorant | 4 parts |
| Nonion ST-221 | 3 parts |
| SANMORIN OT-70 | 3 parts |
| Moisturizer | 9 parts |
| Propylene glycol | 6 parts |
| Mowinyl DM 772 | 29 parts |
| Movinyl DM 5 | 9 parts |
| Rikemal PL-012 | 0.3 parts |
| Antiseptic agent | 5.7 parts |
| Water | Remaining parts |

Specifically, the components above are as follows:
Particulate aluminum silicate: trade name "Sipernat 820" C, I, No. 77004 (manufactured by Degussa)
Blue colorant: trade name "POLYMO NAVY BLUE NT-231 ECO" (manufactured by Kiwa Chemical Industry Co., Ltd)
Nonion ST-221: surfactant, polyoxyethylene sorbitan monostearate (HLB=14.9) (manufactured by Nippon Oil and Fats Company Ltd.)
SANMORIN OT-70: surfactant, dioctyl sodium sulfosuccinate (manufactured by Sanyo Chemical Industries, Ltd.)
Moisturizer: urea
Mowinyl DM 772 (binder resin): acryl emulsion, resin part 46% (manufactured by Clariant Polymer)
Mowinyl DM 5: acryl/vinylacetate copolymer emulsion, resin part 53 wt% (manufactured by Clariant Polymer)
Rikemal PL-012: plasticizer, glycerin diacetomonolaurate (manufactured by Riken Vitamin)
Antiseptic agent: trade name "Proxel XL-2", 2-benzoisothia-zolin-3-one (manufactured by Hoechst Gosei Co., Ltd.).

Fig. 1 is a photograph of water-metachromatic fabric sheet obtained as Example 1 when a lateral line is drawn on its dry surface, using a wet calligraphy brush. It can be seen that the portion that absorbed water has its color changed from light blue region to dark blue region.

### [Embodiment 1]

In Embodiment 1, on a white fabric cloth, printing is done with two different types of mixed ink, that is, second mixed ink and first mixed ink, of the following mixture ratios.

As the second mixed ink, a liquid was prepared in which a surfactant, moisturizer and the like were dissolved or dispersed, to which acryl emulsion (or acryl/vinyl acetate copolymer emulsion as needed) and a plasticizer were added and stirred. Thereafter, particulate aluminum silicate was added and stirred by a dissolver, and then blue colorant was mixed and stirred. Then, the resulting liquid was dispersed using a roll mill or the like, and thus the mixed ink having the following mixture ratio was prepared. Subsequently, the ink was applied by serigraph, to form a coating film (second mixture layer).

| | |
|---|---|
| Particulate aluminum silicate | 4 parts |
| Blue colorant | 16 parts |
| Nonion ST-221 | 3 parts |
| SANMORIN OT-70 | 3 parts |
| Moisturizer | 9 parts |
| Propylene glycol | 6 parts |
| Mowinyl DM 772 | 29 parts |
| Movinyl DM 5 | 9 parts |
| Rikemal PL-012 | 0.3 parts |
| Antiseptic agent | 5.7 parts |
| Water | Remaining parts |

The components are as specified above.

Immediately thereafter, the said first mixed ink was applied by serigraph on the second mixed ink, and thus a coating (first mixture layer) was formed.

The sheet comes to have a mixture layer formed on the fabric cloth, in which the first mixture layer and the second mixture layer do not form clearly distinguishable layers but mixed with each other. By the thus formed mixture layer of light color, it becomes possible to provide the water-metachromatic fabric sheet having color change range of gradation of similar colors, of which color changes, for example, from light blue region in the dried state to the dark blue region in the water-containing state. When it is dried from the water-containing state (dark blue region), the color changes to the light blue region.

### [Embodiment 2]

To a liquid in which the surfactants, wetting agent, moisturizer, coalescence assisting agent, antiseptic agent, antifoam agent and water retention agent as listed in Table 1 were dissolved and dispersed, the resins and plasticizer listed in Table 1 were added and mixed and stirred by a dissolver. Thereafter, particulate aluminum silicate was added and stirred by a dissolver, and thus a white base was prepared. To 10 said white base (ratio by weight), 2 fluorescent yellow-green colorant "Lumikol NKW-C2102E" (manufactured by Nihon Keiko Kagaku) was mixed and stirred. Then, said mixture liquid was further dispersed by a roll mill, to prepare the mixed ink as Example 3. Thereafter, the mixed ink of Example 3 was applied by serigraph in three different patterns of 30g/m², 50g/m² and 100g/m² in application amount, to polyester cloth to form coating films (mixture layers), and thus, the water-metachromatic fabric sheets in accordance with Embodiment 2 were obtained.

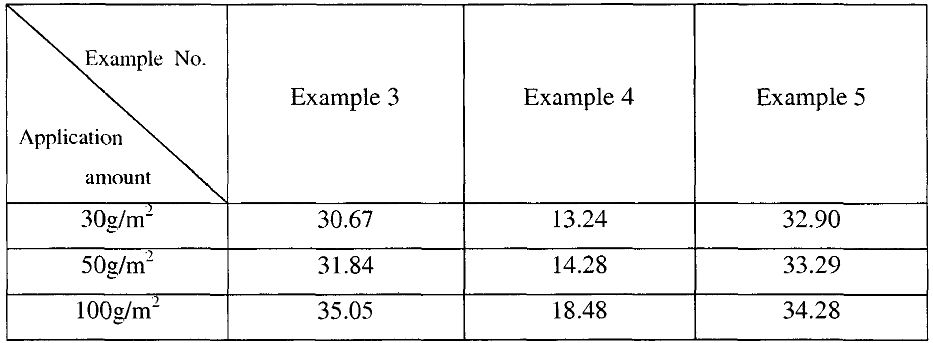

### [Cross-sectional photograph]

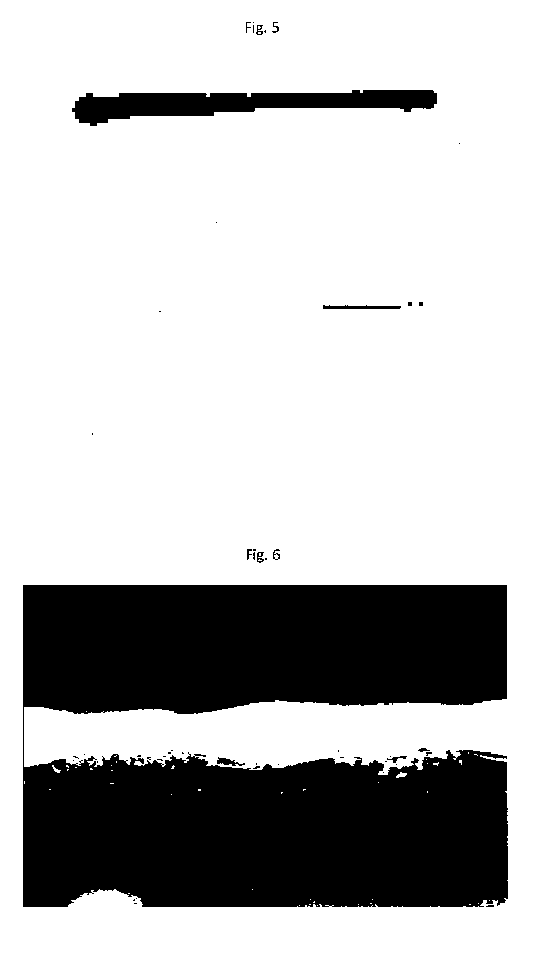

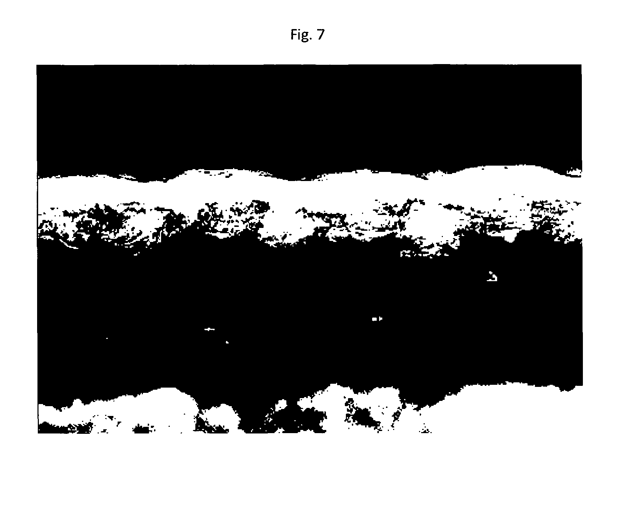

Enlarged cross-sectional photographs of the water-metachromatic fabric sheets of Example 1 and Comparative Example 1 were taken. Fig. 6 is the cross-sectional photograph of Example 1, and Fig. 7 is the cross-sectional photograph of Comparative Example 1. In Fig. 6, one layer of light blue is observed, while in Fig. 7, two separate layers of white and fluorescent pink are observed.

### INDUSTRIAL APPLICABILITY

In the composition of the present invention, a mixture layer containing porous particulate aluminum silicate and colorant is printed on the surface of a fabric. Therefore, a water-metachromatic fabric sheet having a color range of so-called gradation in similar colors can be provided, of which color changes, for example, from light blue region in the dried state to a dark blue region in the water-containing state. Naturally, when dried from the water-containing state (dark blue region), the color changes, for example, to a light blue region.

As described above, the present invention provides a water-metachromatic fabric sheet having a color change range of gradation in similar colors, that has been non-existent conventionally, realizing fancy and interest not known to date.

Therefore, it can suitably be used in a toy set that changes in color with water, including the present water-metachromatic fabric sheet and water applying means in the form of a writing instrument consisting of a pen tip member formed of a plastic porous body or a fabric processed body and a water container, or in the form of an applicator formed of a plastic porous body or a fabric processed body.

### BRIEF DESCRIPTION OF THE DRAWINGS

Fig. 2 is a photograph of one water-metachromatic fabric sheet with application amount of 30g/m², among the obtained fabric sheets, when a lateral line is drawn on its dry surface using a wet calligraphy brush.

### [Embodiment 3]

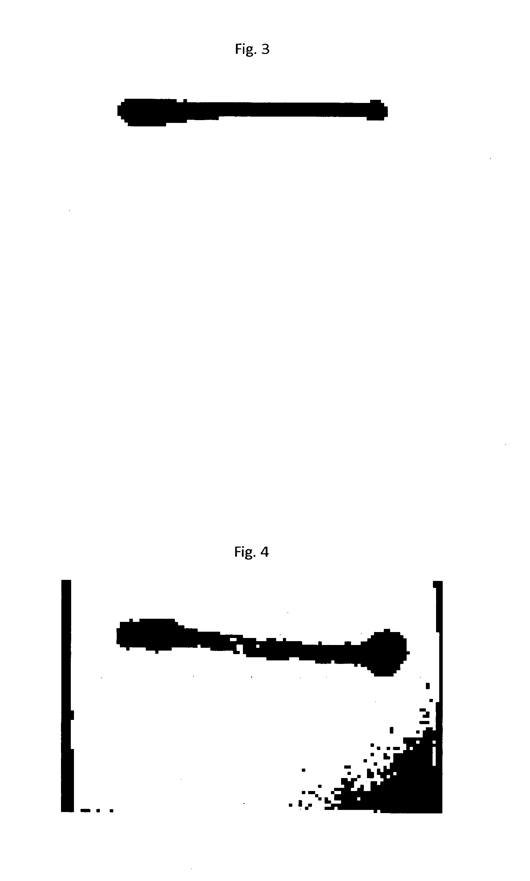

As Embodiment 3, water-metachromatic fabric sheets were prepared under the same conditions as Embodiment 2 except that to 10 said white base (ratio by weight) of Example 3, 1 fluorescent pink colorant "Lumikol NKW-C2117E" (manufactured by Nihon Keiko Kagaku) was mixed and stirred. Fig. 3 is a photograph of one water-metachromatic fabric sheet with application amount of 30g/m², among the obtained fabric sheets, when a lateral line is drawn on its dry surface using a wet calligraphy brush.

### [Embodiment 4]

As Embodiment 4 water-metachromatic fabric sheets were prepared under the same conditions as Embodiment 2 except that to 10 said white base (ratio by weight) of Example 3, 1 fluorescent orange colorant "Lumikol NKW-C2104E" (manufactured by Nihon Keiko Kagaku) was mixed and stirred. Fig. 4 is a photograph of one water-metachromatic fabric sheet with application amount of 30g/m², among the obtained fabric sheets, when a lateral line is drawn on its dry surface using a wet calligraphy brush.

### [Comparative Example 1]

A water-metachromatic fabric sheet as Comparative Example 1 was fabricated through the following process steps, with reference to Example 1 described in Patent Document 1. On a white woven fabric cloth, a fluorescent pink ink, prepared by uniformly mixing and stirring 5 parts of fine-powder fluorescent pink pigment (trade name: EPOCOLOR FP-112, manufactured by Nippon Shokubai Co., Ltd.), 50 parts of acrylic acid ester emulsion (trade name: Mowinyl 763, manufactured by Hoechst Gosei Co., Ltd., solid content 48%), 3 parts of water-based ink thickening agent, 0.5 parts of leveling material, 0.3 parts of antifoam agent and 5 parts of epoxy-based crosslinking agent, was printed by serigraph, and dried and cured at 100°C for 3 minutes, whereby a color layer was formed. Thereafter, on said color layer, a white ink for screen-printing, prepared by uniformly mixing and stirring 15 parts of wet fine-particle silica (trade name: NIPSIL E-200, manufactured by Nihon Silica), 30 parts of urethane emulsion (trade name: HYDRAN HW-90, manufactured by Dainippon Ink & Chemicals Incorporated, solid content 50%), 50 parts of water, 0.5 parts of silicone-based antifoam agent, 3 parts of water-based ink thickening agent, 1 part of ethylene glycol and 3 parts of blocked isocyanate crosslinking agent, was printed to the application amount of 10g/m² by serigraph, and dried and solidified at 130°C for 5 minutes, whereby a white coating film was formed, and thus, the water-metachromatic fabric sheet as Comparative Example 1 was obtained.

Fig. 5 is a photograph of the fabric sheet when a lateral line is drawn on its dry surface, using a wet calligraphy brush. As can be seen from Fig. 5, the water-metachromatic fabric sheet as Comparative Example 1 is white when its surface is dry, and changes to fluorescent pink in the water-containing state. In the water-metachromatic fabric sheet as Comparative Example 1, the color change is not in gradation but from color to color.

### [Comparative Example 2]

As Comparative Example 2, a water-metachromatic fabric sheet was prepared under the same conditions as Comparative Example 1 except that white ink for screen-printing was printed by serigraph to the application amount of 30g/m².

The water-metachromatic fabric sheet as Comparative Example 2 is white when its surface is dry. When a lateral line is drawn on its dry surface using a wet calligraphy brush, the portion corresponding to the lateral line was changed in color so slightly as to be almost unnoticed at a glance, to fluorescent pink.

### [Color Difference Evaluation]

The degree of gradation was evaluated based on color difference between the mixture layer in the surface-dried state and the water-containing state of the water-metachromatic fabric sheets of Embodiments 2 to 4, for respective application amounts. A microscopic color difference meter "CR-241" (Konika Minolta Sensing, Inc.) was used for the color difference measurement. Table 2 shows the results. As can be seen from Table 2, as the thickness of mixture layer increases, the color difference of the mixture layer between the surface-dried state and the water-containing state increases.

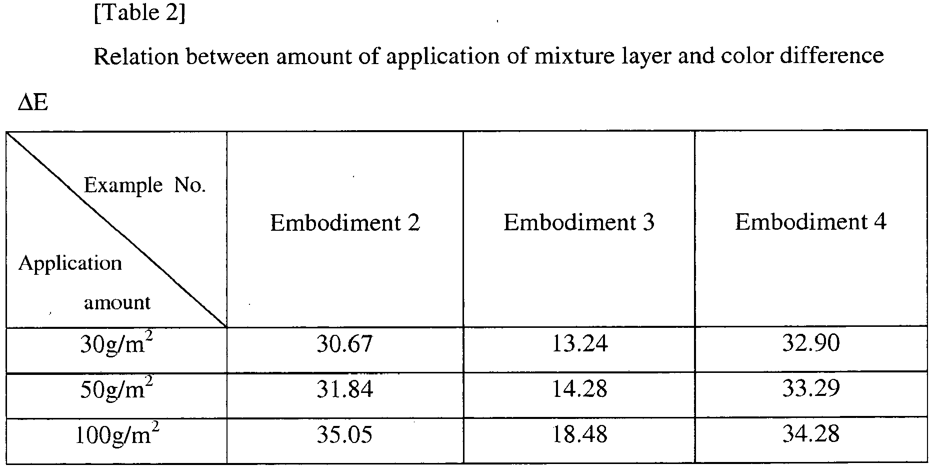

### [Cross-sectional photograph]

Enlarged cross-sectional photographs of the water-metachromatic fabric sheets of Example 1 and Comparative Example 1 were taken. Fig. 6 is the cross-sectional photograph of Example 1, and Fig. 7 is the cross-sectional photograph of Comparative Example 1. In Fig. 6, one layer of light blue is observed, while in Fig. 7, two separate layers of white and fluorescent pink are observed.

### INDUSTRIAL APPLICABILITY

In the composition of the present invention, a mixture layer containing porous particulate aluminum silicate and colorant is printed on the surface of a fabric. Therefore, a water-metachromatic fabric sheet having a color range of so-called gradation in similar colors can be provided, of which color changes, for example, from light blue region in the dried state to a dark blue region in the water-containing state. Naturally, when dried from the water-containing state (dark blue region), the color changes, for example, to a light blue region.

As described above, the present invention provides a water-metachromatic fabric sheet having a color change range of gradation in similar colors, that has been non-existent conventionally, realizing fancy and interest not known to date.

Therefore, it can suitably be used in a toy set that changes in color with water, including the present water-metachromatic fabric sheet and water applying means in the form of a writing instrument consisting of a pen tip member formed of a plastic porous body or a fabric processed body and a water container, or in the form of an applicator formed of a plastic porous body or a fabric processed body.

### BRIEF DESCRIPTION OF THE DRAWINGS

[Fig. 1] A photograph of a surface of water-metachromatic fabric sheet in accordance with Example 1.
[Fig. 2] A photograph of a surface of water-metachromatic fabric sheet in accordance with Embodiment 2 of the present invention.
[Fig. 3] A photograph of a surface of water-metachromatic fabric sheet in accordance with Embodiment 3 of the present invention.
[Fig. 4] A photograph of a surface of water-metachromatic fabric sheet in accordance with Embodiment 4 of the present invention.
[Fig. 5] A photograph of a surface of water-metachromatic fabric sheet in accordance with Comparative Example 1.
[Fig. 6] A cross-sectional photograph of the water-metachromatic fabric sheet in accordance with Example 1.
[Fig. 7] A cross-sectional photograph of the water-metachromatic fabric sheet in accordance with Comparative Example 1.

## Claims

1. A water-metachromatic fabric sheet, **characterized in that** a mixture layer containing porous particulate aluminum silicate and a colorant is printed on a surface of the fabric, wherein said mixture layer includes
a first mixture layer containing 80 to 99.99 wt% of porous particulate aluminum silicate and 0.01 to 20 wt% of colorant dispersed and fixed in a binder resin, and
a second mixture layer containing 0.01 to 20 wt% of porous particulate aluminum silicate and 80 to 99.99 wt% of colorant dispersed and fixed in a binder resin.

2. The water-metachromatic fabric sheet according to claim 1, wherein
said mixture layer is prepared by dispersing and fixing porous particulate aluminum silicate and a colorant in a binder resin.

3. The water-metachromatic fabric sheet according to claim 1, having a sheet member impervious to water laminated on a back surface of said fabric.

4. The water-metachromatic fabric sheet according to claim 1, wherein amount of application of said mixture layer is 30 to 50 g/m².

5. A method of manufacturing a water-metachromatic fabric sheet, comprising the steps of:
on a surface of a fabric, printing, by serigraph, a second mixture layer containing 0.01 to 20 wt% of porous particulate aluminum silicate and 80 to 99.99 wt% of colorant dispersed and fixed in a binder resin; and thereafter printing, by serigraph, a first mixture layer containing 80 to 99.99 wt% of porous particulate aluminum silicate and 0.01 to 20 wt% of colorant dispersed and fixed in a binder resin.

6. A method of manufacturing a water-metachromatic fabric sheet according to claim 5, comprising the steps of:
on a surface of a fabric, printing, by serigraph, a second mixture layer containing 0.01 to 20 wt% of porous particulate aluminum silicate and 80 to 99.99 wt% of colorant dispersed and fixed in a binder resin; and immediately thereafter printing, by serigraph, a first mixture layer containing 80 to 99.99 wt% of porous particulate aluminum silicate and 0.01 to 20 wt% of colorant dispersed and fixed in a binder resin.

## Patentansprüche

1. Wasser-metachromatische Stoffbahn, **dadurch gekennzeichnet, dass** eine Mischungsschicht, die poröses teilchenförmiges Aluminiumsilicat und ein Farbmittel enthält, das auf eine Oberfläche des Stoffs aufgedruckt ist, wobei die Mischungsschicht Folgendes umfasst
eine erste Mischungsschicht, die 80 bis 99,99 Gew.-% poröses, teilchenförmiges Aluminiumsilicat und 0,01 bis 20 Gew.-% Farbmittel enthält, das in einem Bindeharz dispergiert und fixiert ist, und
eine zweite Mischungsschicht, die 0,01 bis 20 Gew.-% poröses, teilchenförmiges Aluminiumsilicat und 80 bis 99,00 Ges.-% Farbmittel enthält, das in einem Bindeharz dispergiert und fixiert ist.

2. Wasser-metachromatische Stoffbahn nach Anspruch 1, wobei
die Mischungsschicht durch Dispergieren und Fixieren von porösem, teilchenförmigem Aluminiumsilicat und einem Farbmittel in einem Bindeharz hergestellt wird.

3. Wasser-metachromatische Stoffbahn nach Anspruch 1, bei der ein Bahnteil, das für Wasser undurchlässig ist, auf die rückseitige Oberfläche des Stoffs laminiert ist.

4. Wasser-metachromatische Stoffbahn nach Anspruch 1, wobei eine Auftragsmenge der Mischungsschicht 30 bis 50 g/m² beträgt.

5. Verfahren zur Herstellung einer Wassermetachromatischen Stoffbahn, umfassend die Schritte des:
Aufdruckens, auf eine Oberfläche eines Stoffs, durch Siebdruck, einer zweiten Mischungsschicht, die 0,01 bis 20 Gew.-% poröses, teilchenförmiges Aluminiumsilicat und 80 bis 99,99 Gew.-% Farbmittel, das in einem Bindeharz dispergiert und fixiert ist, enthält; und daraufhin Aufdruckens, durch Siebdruck, einer ersten Mischungsschicht, die 80 bis 99,99 Gew.-% poröses, teilchenförmiges Aluminiumsilicat und 0,01 bis 20 Gew.-% Farbmittel, das in einem Bindeharz dispergiert und fixiert ist, enthält.

6. Verfahren zur Herstellung einer Wassermetachromatischen Stoffbahn nach Anspruch 5, umfassend die Schritte des:
Aufdruckens, auf eine Oberfläche des Stoffs, durch Siebdruck, einer zweiten Mischungsschicht, die 0,01 bis 20 Gew.-% poröses, teilchenförmiges Aluminiumsilicat und 80 bis 99,99 Gew.-% Farbmittel, das in einem Bindeharz dispergiert und fixiert ist, enthält; und sofort daraufhin Aufdruckens, durch Siebdruck, einer ersten Mischungsschicht, die 80 bis 99,99 Gew.-% poröses teilchenförmiges Aluminiumsilicat und 0,01 bis 20 Gew.-% Farbmittel, das in einem Bindeharz dispergiert und fixiert ist, enthält.

## Revendications

1. Feuille de tissu métachromatique dans l'eau, **caractérisé en ce qu'**une couche mixte contenant du silicate d'aluminium particulaire poreux et un colorant est imprimée sur une surface du tissu, étant précisé que ladite couche mixte contient
une première couche mixte contenant 80 à 99,99 % en poids de silicate d'aluminium particulaire poreux et 0,01 à 20 % en poids de colorant dispersé et fixé dans une résine de liaison, et
une seconde couche mixte contenant 0,01 à 20 % en poids de silicate d'aluminium particulaire poreux et 80 à 99,99 % de colorant dispersé et fixé dans une résine de liaison.

2. Feuille de tissu métachromatique dans l'eau selon la revendication 1, étant précisé que la couche mixte est préparée grâce à une dispersion et à une fixation de silicate d'aluminium particulaire poreux et d'un colorant dans une résine de liaison.

3. Feuille de tissu métachromatique dans l'eau selon la revendication 1, présentant un élément de feuille imperméable à l'eau, qui est appliqué en couche sur une surface arrière du tissu.

4. Feuille de tissu métachromatique dans l'eau selon la revendication 1, étant précisé que la quantité d'application de la couche mixte est de 30 à 50 g/m².

5. Procédé pour fabriquer une feuille de tissu métachromatique dans l'eau, comprenant les étapes qui consistent :
à imprimer par sérigraphie sur une surface d'un tissu une seconde couche mixte contenant 0,01 à 20 % en poids de silicate d'aluminium particulaire poreux et 80 à 99,99 % de colorant dispersé et fixé dans une résine de liaison ; et à imprimer ensuite par sérigraphie une première couche mixte contenant 80 à 99,99 % en poids de silicate d'aluminium particulaire poreux et 0,01 à 20 % en poids de colorant dispersé et fixé dans une résine de liaison.

6. Procédé pour fabriquer une feuille de tissu métachromatique dans l'eau selon la revendication 5, comprenant les étapes qui consistent :
à imprimer par sérigraphie sur une surface d'un tissu une seconde couche mixte contenant 0,01 à 20 % en poids de silicate d'aluminium particulaire poreux et 80 à 99,99 % en poids de colorant dispersé et fixé dans une résine de liaison ; et à imprimer immédiatement après, par sérigraphie, une première couche mixte contenant 80 à 99,99 % en poids de silicate d'aluminium particulaire poreux et 0,01 à 20 % en poids de colorant dispersé et fixé dans une résine de liaison.
